# EUROPEAN PATENT APPLICATION

(11) **EP 2 045 585 A2**
(43) Date of publication of application: **08.04.2009**
(21) Application number: 08165530.0
(22) Date of filing: 30.09.2008
(51) Int. Cl.: G01F 23/24, G01F 23/26, G01F 23/28

(54) **Sensor with Polymer Substrate for use in Corrosive Liquids**

(30) Priority: 05.10.2007 US 973179
(71) Applicant: Delphi Technologies, Inc., Troy, Michigan 48007 (US)
(72) Inventor: Carmona, Jesus, Columbus, IN 47203 (US); Hernandez-Paz, Juan F., C.P. 32472, Ciudad Juarez (MX); Gonzales, Antonio, El Paso, TX 79936 (US)
(74) Representative: Denton, Michael John

(57) **Abstract**

A fuel system sensor (16) has an acetal substrate (22) that does not corrode in fuel, and the substrate (22) bears conductors (24, 26) that are connected to terminals (28) partially embedded in the substrate (22). Various methods for forming the conductor paths on the acetal are disclosed. The terminals (28) can be formed with thermal relief structure (34-38).

## Description

### TECHNICAL FIELD

The present invention relates generally to sensors that can be used in corrosive liquids such as gasoline or ethanol-based fuels.

### BACKGROUND OF THE INVENTION

Sensors such as fluid level sensors that are used in vehicle fuel systems typically include electrically conductive elements for generating and/or sensing electric or magnetic fields. Electrically conductive elements in fuel systems may also be used as electromagnetic field shields.

As understood herein, the electrically conductive elements typically are supported on a substrate, often under fairly precise tolerance constraints regarding spacing between elements, etc. Furthermore, the substrate typically is exposed to the same corrosive environment such as engine fuel as are the conductors. The present invention is directed to both of the above two sometimes competing design considerations, i.e., providing conductor substrates that can withstand prolonged exposure to corrosive liquids such as engine fuel while facilitating relatively precise disposition of the conductors on the substrates.

### SUMMARY OF THE INVENTION

A vehicle system holds a corrosive liquid such as gasoline, and a sensor is in fluid communication with the vehicle system. The sensor has a polymer substrate such as acetal that bears one or more electrical conductors that can be used as sensing elements and/or that can send signals to, e.g., an engine control module.

In some applications, the sensing elements are protected by their own polymer coating, which case the sensor need not be additionally coated with a polymer. Also, electrical terminals may be embedded in the substrate and can be placed in electrical contact with the conductor, with the terminals being formed with thermal relief structure. The substrate may be formed with chamfered holes through which the conductors engage respective terminals.

In another aspect, fuel system sensor includes a substrate made of acetal and having at least one hole formed therein. One or more electrical conductors are provided, and respective terminals are embedded in the substrate to communicate with the conductor through the hole.

In still another aspect, a method for making a corrosive liquid system sensor includes providing an acetal substrate, and, using electroless plating, forming at least one electrical conductor on the substrate.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a block diagram of a non-limiting system in accordance with present principles;

Figure 2 is a perspective view of a sensor made in accordance with present principles;

Figure 3 is a perspective view of a terminal with thermal relief structure;

Figure 4 is a detail perspective view showing a chamfered terminal hole;

Figure 5 is a flow chart of a first method of making the sensor using a photo resist layer;

Figure 6 is a flow chart of a second method of making the sensor using two molding steps with a carrier plastic; and

Figure 7 is a flow chart of a third method of making the sensor using laser etching.

### DESCRIPTION OF THE PREFERRED EMBODIMENT

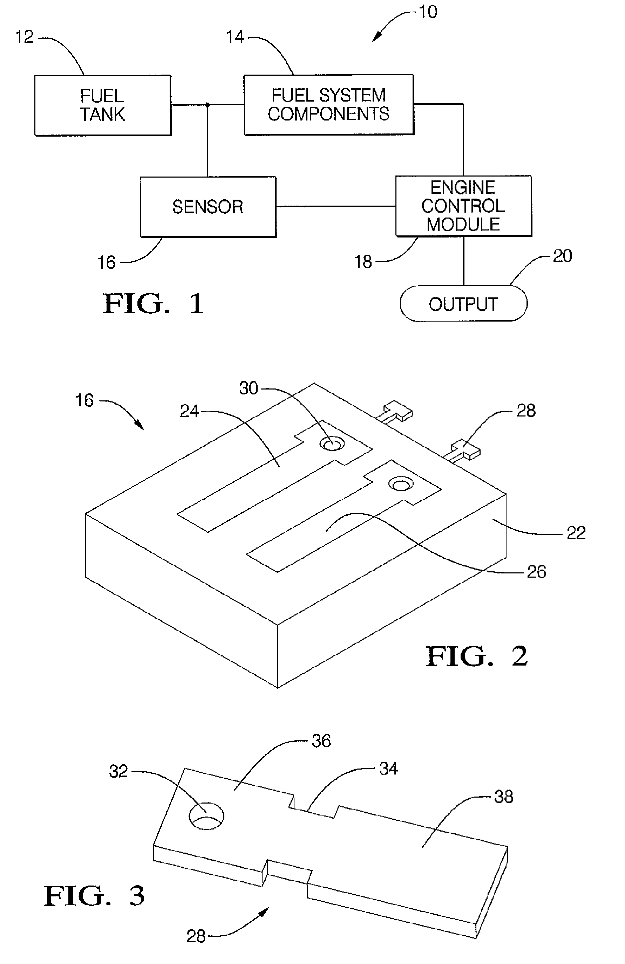

Referring initially to Figure 1, a system is shown, generally designated 10, which includes a vehicle fuel tank 12 that is cooperatively engaged with various fuel system components 14 such as injection systems, fuel pumps, etc. A sensor 16 in accordance with present principles is engaged with the fuel tank 12 and/or fuel system components 14 and can be immersed in fuel to sense, e.g., its percentage of ethanol concentration, level in the tank 12, etc. The sensor 16 can send signals to a computer such as an engine control module (ECM) 18 that in turn can use the signals to drive an output 20 such as a fuel tank level gage or fuel tank low level lamp or fuel pressure gage or other appropriate output device. While "sensor" is the term used herein to describe the structure shown in Figures 2-4 and made in accordance with Figures =5-7, it is to be understood that the term "sensor" also includes structures used for shielding. It is to be further understood that while the non-limiting system 10 assumes a fuel (gasoline or diesel) application, the sensor 16 may be used in other corrosive liquids such as alcohol and oil. For present purposes water is not considered "corrosive".

Figure 2 shows that the sensor 16 includes a polymer substrate 22 preferably made of acetal such as the acetal marketed under the trade name "Delrin." The substrate 22 may be parallelepiped-shaped as shown. One or more electrical conductors may be disposed on the substrate 22.

Each conductor 24, 26 is electrically connected to one or more respective metal terminals 28 that, in the embodiment shown in Figure 2, are partially embedded in the substrate 22 and partially emerge from an end thereof. More particularly, an electrical path is established from a conductor 24/26 to a respective terminal 28 through a respective hole 30 that is formed in the substrate 22 in accordance with principles below.

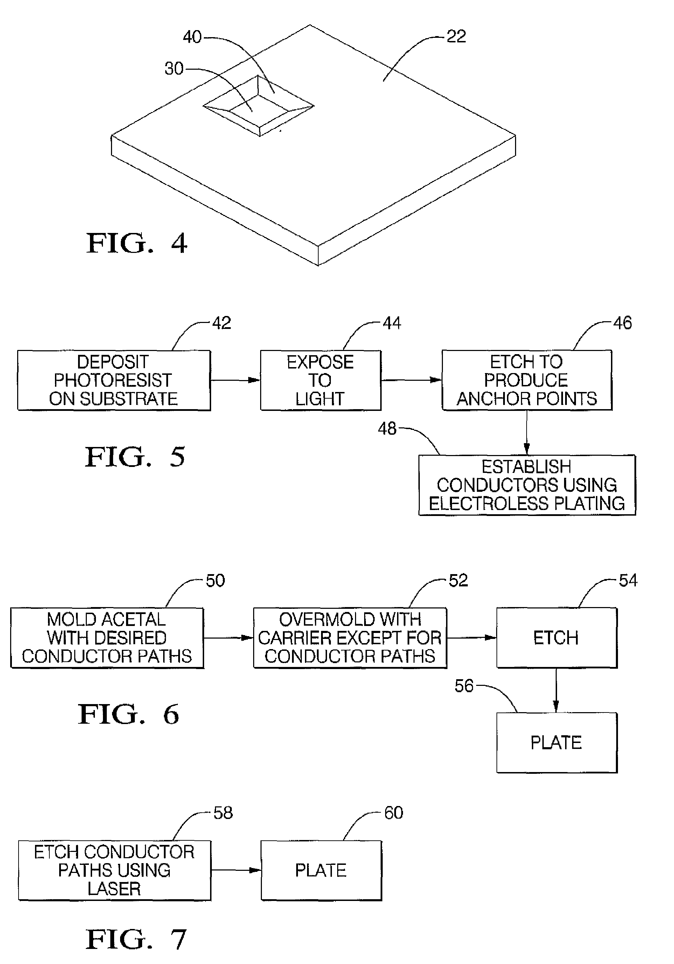

Details ofnon-limiting terminals 28 and holes 30 are shown in Figures 3 and 4. In preferred non-limiting embodiments each terminal 28 is formed with a terminal opening 32 with which an electrical lead or connector can be engaged by, e.g., soldering, and each terminal 28 is also formed with thermal relief structure. In the particular embodiment shown in Figure 3, the thermal relief structure is a narrower segment 34 that is formed between two wider segments 36, 38 of the otherwise parallelepiped-shaped terminal 28. The narrower segment 34 resists heat transfer from the solder in and around the terminal opening and the wider segment 36 to the opposed wider segment 38, which is embedded in the substrate 22. As understood herein, providing terminals with thermal relief structure permits soldering without unduly damaging the acetal substrate 22.

Figure 4 shows that to facilitate smooth transition of plating between the conductors 24, 26 and respective terminals 28, the walls 40 of the holes 30 may be chamfered. In the specific embodiment shown the walls 40 slope inwardly as shown from the top surface of the substrate 22. Each hole 30 may have a square periphery as shown or a circular periphery or other suitably shaped periphery.

A first method for making the sensor 16 is shown in Figure 5. It is to be understood that in all embodiments the substrate 22 initially is made by overmolding the polymer onto the terminals 28. The holes 30 can be formed concurrently with the desired conductor patterns during etching or, more preferably, during the overmolding of the terminals. An extra inner shielding element made of thin metallic stock may also be incorporated into the substrate by overmolding. The shielding element terminates in or is soldered to a terminal. Or, if inner shielding is required it may be established by using two acetal substrates, plating a face of one substrate and then thermally bonding the two substrates together so that the shield is between the substrates.

Commencing at block 42, a photoresist layer is deposited on the substrate 22 by, e.g., gluing the resist layer to the substrate 22. Moving to block 44, the substrate with photoresist layer are exposed to light, e.g., ultraviolet light, in the desired pattern of the conductors to be subsequently plated. Thus, the photoresist layer is a mask that establishes the negative of the desired shape of the electrodes.

Proceeding to block 46, the substrate with remaining photoresist is etched to form the desired patterns of the conductors 24, 26, which establish anchor points for the conductors to be plated. The etchant may be the substance marketed under the trade name "Delrin Etch." The etch can be accomplished by submerging the substrate in a solution of the etchant. The mask is removed in accordance with photoresist removal principles known in the art. At block 48 the conductors 24, 26 are deposited onto the patterns formed in the substrate 22, preferably using electroless plating techniques known in the art. If desired, the conductors 24, 26 may be protected by plating them with tin or aluminum through an electroplating process, and when aluminum is used it may be anodized.

A second method for making the sensor 16 is shown in Figure 6. Commencing at block 50, a polymer such as acetal is molded into the substrate 22 with the desired pattern of the conductors 24, 26 formed in the mold. Next, at block 52, the substrate is overmolded with a carrier plastic, except for the parts of the substrate that form the desired pattern of the conductors. These portions are not overmolded. Preferably, the carrier plastic is not sensitive to the etchant, so that only the portions of the substrate 22 that form the desired patterns of the conductors are etched at block 56. The conductors 24, 26 are then plated onto the substrate at block 58 in accordance with principles above. If desired, the carrier plastic may be removed.

In an alternate embodiment of Figure 6, the initially molded part may be acrylonitrile-butadiene-styrene (ABS) and acetal may be used for the overmolding. The etching is done so that only the ABS, not the acetal, is etched. Then the ABS is plated.

In another alternate embodiment of Figure 6, the acetal prior to molding at block 50 may be mixed with a metallization agent such as Palladium, and the carrier plastic used for overmolding at block 52 is non-metallized acetal, which promotes plating at block 56 after etching at block 54.

Figure 7 shows that alternatively to etching using a solvent, the substrate 22 may be directly etched at block 5 8 using a laser to form the desired conductor patterns in the substrate. The etched substrate is then plated at block 60 in accordance with principles above.

While the particular SENSOR WITH POLYMER SUBSTRATE FOR USE IN CORROSIVE LIQUIDS is herein shown and described in detail, it is to be understood that the subject matter which is encompassed by the present invention is limited only by the claims.

## Claims

1. A system, comprising:
a vehicle system (10) holding a corrosive liquid; and
at least one sensor (16) in fluid communication with the vehicle system (10), the sensor (16) comprising a polymer substrate (22) bearing at least one electrical conductor (24, 26).

2. The system of Claim 1, comprising an engine control module (18) receiving signals from the conductor (24, 26).

3. The system of Claim 2, wherein the substrate (22) is acetal.

4. The system of Claim 1, wherein the sensor (16) is not coated with a polymer.

5. The system of Claim 1, comprising at least one electrical terminal (28) embedded in the substrate (22) and in electrical contact with the conductor (24, 26), the terminal (28) being formed with thermal relief structure (34-38).

6. The system of Claim 5, comprising at least one hole (30) in the substrate (22), the conductor (24, 26) contacting the terminal (28) through the hole (30).

7. The system of Claim 6, wherein the hole (30) is chamfered.

8. The system of Claim 1, comprising a metallized plate layer covering at least part of the substrate (22).

9. A fuel system sensor (16) comprising:
a substrate (22) made of acetal and having at least one hole (30) formed therein;
at least one electrical conductor (24, 26); and
at least one terminal (28) embedded in the substrate (22) and communicating with the conductor (24, 26) through the hole (30).

10. The sensor (16) of Claim 9, wherein the conductor (24, 26) is not coated with a polymer.

11. The sensor (16) of Claim 9, wherein the hole (30) is chamfered.

12. The sensor (16) of Claim 9, comprising a metallized plate layer covering the substrate (22).

13. The sensor (16) of Claim 9, wherein the terminal (28) is formed with a narrower portion intermediate two wider portions.

14. A method for making a corrosive liquid system sensor (16), comprising:
providing an acetal substrate (22); and
using electroless plating, forming at least one electrical conductor (24, 26) on the substrate (22).

15. The method of Claim 14, comprising using a laser to etch a pattern onto the substrate (22), the conductor (24, 26) being formed in the pattern.

16. The method of Claim 14, comprising depositing a photoresist substance on the substrate (22) in a pattern and exposing the photoresist substance to ultraviolet light to establish the pattern on the substrate (22).

17. The method of Claim 14, comprising:
molding the substrate (22) to have a desired conductor pattern;
overmolding at least parts of the substrate (22) with a carrier plastic; and
etching the substrate (22) to establish at least portions of an electrical connectivity path.

18. The method of Claim 17, comprising establishing a metallization activation agent in the substrate (22) prior to the overmolding.
